# EUROPÄISCHE PATENTSCHRIFT

(11) **EP 2 352 615 B1**
(45) Veröffentlichungstag und Bekanntmachung des Hinweises auf die Patenterteilung: **13.06.2018**
(21) Anmeldenummer: 09771683.1
(22) Anmeldetag: 05.11.2009
(51) Int. Cl.: B23K 13/01, B23K 20/12

(54) **VERFAHREN ZUM HERSTELLEN ODER REPARIEREN VON INTEGRAL BESCHAUFELTEN GASTURBINENROTOREN**
METHOD FOR MANUFACTURING OR REPAIRING BLISK
PROCÉDÉ DE PRODUCTION OU DE RÉPARATION DE DISQUES AUBAGÉS MONOBLOCS

(30) Priorität: 13.11.2008 DE 102008057188
(43) Veröffentlichungstag der Anmeldung: 10.08.2011
(73) Patentinhaber: MTU Aero Engines AG, 80995 München (DE)
(72) Erfinder: RICHTER, Karl-Hermann, 85229 Markt Indersdorf (DE)
(86) Internationale Anmeldenummer: PCT/DE2009/001564
(87) Internationale Veröffentlichungsnummer: WO 2010/054627

(56) Entgegenhaltungen:
- EP-A1- 1 698 423
- EP-A2- 1 526 252
- WO-A1-2009/049596
- WO-A1-2010/020216
- DE-A1- 10 343 760

## Beschreibung

Die Erfindung betrifft ein Verfahren zum Herstellen von integral beschaufelten Gasturbinenrotoren nach dem Oberbegriff des Anspruchs 1. Des Weiteren betrifft die Erfindung ein Verfahren zum Reparieren von integral beschaufelten Gasturbinenrotoren nach dem Oberbegriff des Anspruchs 8.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle. Die wichtigsten, heutzutage für Flugtriebwerke oder sonstige Gasturbinen verwendeten Werkstoffe sind Titanlegierungen, Nickellegierungen und hochfeste Stähle. Die hochfesten Stähle werden für Wellenteile, Getriebeteile, Verdichtergehäuse und Turbinengehäuse verwendet. Titanlegierungen sind typische Werkstoffe für Verdichterteile. Nickellegierungen sind für die heißen Teile des Flugtriebwerks geeignet. Als Fertigungsverfahren für Gasturbinenbauteile aus Titanlegierungen, Nickellegierung oder sonstigen Legierungen sind aus dem Stand der Technik in erster Linie das Feingießen sowie Schmieden bekannt. Alle hochbeanspruchten Gasturbinenbauteile, wie zum Beispiel die Schaufeln für einen Verdichter, sind Schmiedeteile. Laufschaufeln und Leitschaufeln der Turbine werden hingegen in der Regel als Feingussteile ausgeführt.

Zur Steigerung des Wirkungsgrads von Gasturbinen werden die Rotoren derselben zunehmend als integral beschaufelte Rotoren ausgeführt. Integral beschaufelte Rotoren werden auch als Blisk (bladed disk) oder Bling (bladed ring) bezeichnet, und zwar abhängig davon, ob ein scheibenförmiger Rotorgrundkörper oder ein ringförmiger Rotorgrundkörper vorliegt. Alle bislang aus dem Stand der Technik bekannten Verfahren zur Herstellung von integral beschaufelten Rotoren erfordern einen hohen Fertigungsaufwand und sind daher teuer. Des Weiteren bereitet die Reparatur integral beschaufelter Rotoren Schwierigkeiten.

Aus der EP-A-1 698 423 ist ein Verfahren zum Reibschweißfügen von einer Laufschaufel an einen Rotorgrundkörper mit Bewegung eines zwischen der Laufschaufel und dem Rotorgrundkörper angeordneten Fügeteils bekannt.

Aus der DE-A-103 43 760 ist Verfahren zur Reparatur oder Herstellung eines beschaufelten Rotors durch induktives Hochfrequenzpressschweißen bekannt. Hiervon ausgehend liegt der vorliegenden Erfindung das Problem zu Grunde, ein neuartiges Verfahren zum Herstellen oder Reparieren von integral beschaufelten Gasturbinenrotoren vorzuschlagen.

Dieses Problem wird durch ein Verfahren zum Herstellen von integral beschaufelten Gasturbinenrotoren gemäß Anspruch 1 gelöst. Hiernach wird jeder Adapater mit dem Anbindungsabschnitt der jeweiligen Laufschaufel durch Reibschweißen verbunden, wobei jede Laufschaufel über den mit derselben verbundenen Adapater mit dem jeweiligen Anbindungsabschnitt des Rotorgrundkörpers durch induktives Hochfrequenzpressschweißen verbunden wird.

Das erfindungsgemäße Verfahren zum Reparieren von integral beschaufelten Gasturbinenrotoren ist in Anspruch 7 definiert. Hiernach wird eine beschädigte Laufschaufel derart vom Rotorgrundkörper getrennt, dass zuerst der Adapater derselben durchtrennt wird, wobei anschließend vom Anbindungsabschnitt des Rotorgrundkörpers der verbleibende Abschnitt des Adapaters vollständig entfernt wird, und wobei darauffolgend eine neue Laufschaufel oder eine reparierte Laufschaufel derart mit dem Anbindungsabschnitt des Rotorgrundkörpers verbundnen wird, dass ein mit der neuen Laufschaufel oder der reparierten Laufschaufel verbundener Adapater mit dem jeweiligen Anbindungsabschnitt des Rotorgrundkörpers durch induktives Hochfrequenzpressschweißen verbunden wird.

Das erfindungsgemäße Verfahren zum Herstellen oder Reparieren von integral beschaufelten Gasturbinenrotoren findet vorzugsweise beim Herstellen und Reparieren von Turbinenrotoren Verwendung, wobei bei der Herstellung oder Reparatur eines integral beschaufelten Turbinenrotors gießtechnisch hergestellte Laufschaufeln, die aus einem nicht schmelzschweißgeeigneten Werkstoff bestehen, über den Adapter an einen schmiedetechnisch hergestellten Rotorgrundkörper gefügt werden, der aus einem schmelzschweißgeeigneten Werkstoff hergestellt ist. Die Adapter, über welche die Laufschaufeln an den Rotorgrundkörper gefügt werden, sind aus einem schmelzschweißgeeigneten Werkstoff gebildet, wobei der Adapter aus dem schmelzschweißgeeigneten Werkstoff mit der Laufschaufel aus dem nicht schmelzschweißgeeigneten Werkstoff durch Reibschweißen verbunden wird, und wobei die Laufschaufel über den Adapter mit dem Rotorgrundkörper aus dem schmelzschweißgeeigneten Werkstoff durch induktives Hochfrequenzpressschweißen verbunden wird. Hierdurch ist eine einfache und kostengünstige Herstellung sowie Reparatur von integral beschaufelten Gasturbinenrotoren, insbesondere integral beschaufelten Turbinenrotoren, möglich.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

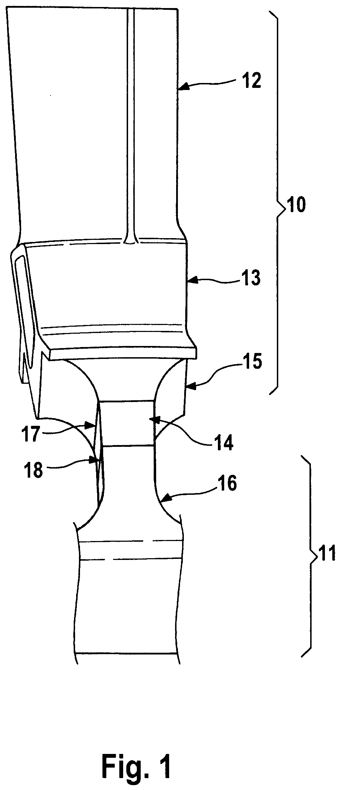

- Fig. 1: eine schematisierte Darstellung zur Verdeutlichung des erfindungsgemäßen Verfahrens zum Herstellen oder Reparieren von integral beschaufelten Gasturbinenrotoren.

Die hier vorliegende Erfindung betrifft ein Verfahren zum Herstellen oder Reparieren von integral beschaufelten Gasturbinenrotoren, wobei das Verfahren insbesondere bei der Herstellung und Reparatur von integral beschaufelten Turbinenrotoren Verwendung findet. Derartige, integral beschaufelte Turbinenrotoren verfügen über einen schmiedetechnisch hergestellten Rotorgrundkörper aus einem schmelzschweißgeeigneten Werkstoff sowie über gießtechnisch hergestellte Laufschaufeln aus einem nicht schmelzschweißgeeigneten Werkstoff. Die gießtechnisch hergestellten Laufschaufeln solcher Turbinenrotoren weisen ein polykristallines, gerichtet erstarrtes oder ein einkristallines Werkstoffgefüge mit einem hohen γ'-Anteil auf und sind daher nicht schmelzschweißgeeignet.

Fig. 1 zeigt einen Ausschnitt aus einem herzustellenden bzw. zu reparierenden Gasturbinenrotor im Bereich einer Laufschaufel 10 und eines Rotorgrundkörpers 11, wobei die Laufschaufel 10 ein Schaufelblatt 12 und einen Schaufelfuß 13 umfasst. Gemäß Fig. 1 ist die Laufschaufel 10 mit dem Rotorgrundkörper 11 über einen Adapter 14 verbunden, wobei der Adapter 14 einerseits an einem Anbindungsabschnitt 15 der Laufschaufel 10 und andererseits an einem Anbindungsabschnitt 16 des Rotorgrundkörpers 11 angreift. Bei einem integral beschaufelten Turbinenrotor, dessen Rotorgrundkörper 11 aus einem schmelzschweißgeeigneten Werkstoff besteht und dessen Laufschaufeln 10 aus einem nicht schmelzschweißgeeigneten Werkstoff bestehen, sind die Adapter 14, über welche die Laufschaufeln 10 am Rotorgrundkörper 11 angebunden sind, aus einem schmelzschweißgeeigneten Werkstoff gefertigt.

Im Sinne der Erfindung wird beim Herstellen eines integral beschaufelten Gasturbinenrotors so vorgegangen, dass in einem ersten Schritt Adapter 14 an die Anbindungsabschnitte 15 der Laufschaufeln 10 durch Reibschweißen gefügt werden.

Hierbei bildet sich eine Fügezone 17 aus, wobei als Reibschweißverfahren zum Verbinden der Adapter 14 mit den Anbindungsabschnitten 15 der Laufschaufeln 10 vorzugsweise lineares Reibschweißen oder Rotationsreibschweißen verwendet wird.

Nach dem Verbinden der Adapter 14 mit den Laufschaufeln 10 werden die Laufschaufeln 10 über die Adapter 14 mit den Anbindungsabschnitten 14 des Rotorgrundkörpers 11 durch induktives Hochfrequenzpressschweißen verbunden. Hierbei bilden sich zwischen den Adaptern 14 und den Anbindungsabschnitten 16 des Rotorgrundkörpers 11 Fügezonen 18 aus.

Beim induktiven Hochfrequenzpressschweißen zum Verbinden einer Laufschaufel 10 über den an die Laufschaufel 10 gefügten Adapter 14 an den Anbindungsbereich 16 des Rotorgrundkörpers 11 wird der Anbindungsabschnitt 16 des Rotorgrundkörpers 11 sowie der Adapter 14 ganz oder teilweise von einer Induktionsspule umschlossen, über die Wirbelströme zur Erwärmung der Fügezone 18 zwischen dem Adapter 14 und dem Anbindungsabschnitt 16 des Rotorgrundkörpers 11 induziert werden. Hierbei bildet sich in der Fügezone 18 eine schmelzflüssige Phase aus, sodass mit relativ geringen Stauchkräften in der Größenordnung zwischen 10 und 20 MPa die Reibschweißverbindung zwischen dem Adapter 14 und dem Anbindungsabschnitt 16 des Rotorgrundkörpers 11 erfolgen kann. Hierbei wird die schmelzflüssige Phase vollständig aus der Fügezone 18 herausgedrückt.

Im Anschluss an das oben dargestellte Verbinden einer Laufschaufel 10 an den Rotorgrundkörper 11 mit Hilfe des Adapters 14 erfolgt vorzugsweise ein mechanisches Bearbeiten zumindest der Fügezonen 17, 18 durch z. B. Fräsen oder ECM (Electro Chemical Machining) bzw. PECM Precise Eletro Chemical Machining) Bearbeitung, um dieselben mit einer definierten Kontur zu versehen. Ferner kann eine Wärmebehandlung des hergestellten Gasturbinenrotors durchgeführt werden, wobei zumindest die Fügezonen 17, 18 einer Wärmebehandlung unterzogen werden. Ebenso ist es möglich, den gesamten Gasturbinenrotor einer Wärmebehandlung zu unterziehen.

Bei der Reparatur eines solchen integral beschaufelten Gasturbinenrotors wird so vorgegangen, dass zuerst mindestens eine beschädigte Laufschaufel 10 vom Rotorgrundkörper 11 dadurch entfernt wird, dass der entsprechende Adapter 14, über den die beschädigte Laufschaufel 10 am Rotorgrundkörper 11 befestigt ist, durchtrennt wird.

Das Durchtrennen des Adapters 14 erfolgt dabei in etwa auf der Höhe der halben radialen Mitte des Adapters 14. Das Durchtrennen des Adapters 14 kann durch Trennschleifen, eine EDM-Bearbeitung wie Erodieren oder durch andere Trennverfahren erfolgen.

Im Anschluss an das Abtrennen einer beschädigten Laufschaufel 10 durch Durchtrennen des Adapters 14 wird der am Anbindungsabschnitt 16 des Rotorgrundkörpers 11 verbleibende Abschnitt des Adapters vom Anbindungsabschnitt 16 vollständig entfernt bzw. abgetragen, und zwar bis zur ursprünglichen Position der Fügezone 18, wobei dies z. B. durch Fräsen, Schleifen oder andere Verfahren erfolgen kann.

Anschließend wird eine neue Laufschaufel oder eine reparierte Laufschaufel mit dem Anbindungsbereich 16 verbunden, nämlich über einen mit der neuen Laufschaufel oder der reparierten Laufschaufel verbundenen Adapter, der über induktives Hochfrequenzpressschweißen mit dem Anbindungsabschnitt 16 des Rotorgrundkörpers 11 verbunden wird.

Dann, wenn eine neue Laufschaufel 10 an den Rotorgrundkörper 11 angebunden wird, wird vorab ein neuer Adapter 14 mit dem Anbindungsabschnitt 16 der Laufschaufel 10 durch Reibschweißen verbunden, wobei anschließend die Laufschaufel 10 über den Adapter 14 mit Hilfe von induktivem Hochfrequenzpressschweißen an den Anbindungsabschnitt 16 des Rotorgrundkörpers 11 gefügt wird.

Dann, wenn eine vorab vom Rotorgrundkörper abgetrennte und nach dem Abtrennen reparierte Laufschaufel mit dem Anbindungsbereich 16 des Rotorgrundkörpers 11 verbunden werden soll, wird zuerst der am Anbindungsabschnitt 16 der reparierten Laufschaufel verbleibende Abschnitt des durchtrennten Adapters 14 plangeschliffen, um so eine ebene Fläche herzustellen, wobei auf dieser ebenen Fläche insbesondere durch Laserauftragsschweißen, wie z.B. Laserpulverauftragsschweißen oder Laserdrahtauftragschweißen, oder durch Mikroplasma-Auftragschweißen der Adapter 14 neu aufgebaut wird. Alternativ kann der Adapter auch vollständig entfernt und durch IHFP (induktives Hochfrequenzpressschweißen) ein neuer Adapter aufgebracht werden. Anschließend wird der neu aufgebaute Adapter nachbearbeitet, um eine gewünschte Kontur herzustellen, wobei diese Nachbearbeitung insbesondere durch Fräsen erfolgt. Darauffolgend kann dann die reparierte Gasturbinenschaufel 10 über den neu aufgebauten Adapter 14 mit dem entsprechend präparierten Anbindungsabschnitt 16 des Rotorgrundkörpers 11 verbunden werden.

Wie bei der Neuherstellung eines Gasturbinenrotors kann auch beim Reparieren eins Gasturbinenrotors nach dem Verbinden einer Laufschaufel mit dem Rotorgrundkörper zumindest im Bereich der Fügezonen eine mechanische Bearbeitung und/oder Wärmebehandlung durchgeführt werden. Ebenso ist es möglich, den gesamten Gasturbinenrotor nach dessen Reparatur einer Wärmebehandlung zu unterziehen.

Insbesondere bei der Reparatur eines integral beschaufelten Gasturbinenrotors ist es möglich, nach dem Entfernen des am Anbindungsabschnitt 16 des Rotorgrundkörpers 11 verbleibenden Abschnitts des Adapters 14 den Anbindungsabschnitt 16 durch Laserpulverauftragsschweißen lokal zu vergrößern, um so nach dem Fügen einer Laufschaufel 10 an den Anbindungsabschnitt 16 des Rotorgrundkörpers 11 eine mechanische Bearbeitung der Fügebereiche 17, 18 auf Endmaß zu ermöglichen.

Mit der Erfindung können Einzellaufschaufeln und Laufschaufelsegmente, die mehrere Laufschaufeln umfassen, bei der Herstellung oder Reparatur von integral beschaufelten Gasturbinenrotoren an den Rotorgrundkörper gefügt werden.

## Patentansprüche

1. Verfahren zum Herstellen von integral beschaufelten Gasturbinenrotoren, insbesondere von integral beschaufelten Turbinenrotoren, wobei an einen Rotorgrundkörper Laufschaufeln unter Zwischenanordnung eines Adapters gefügt werden, wobei zuerst an jeweils einen Anbindungsabschnitt (15) jeder mit dem Rotorgrundkörper zu verbindenden Laufschaufel (10) je ein Adapater (14) gefügt wird, und dass anschließend jede Laufschaufel (10) über den mit derselben verbundenen Adapater (14) an jeweils einen Anbindungsabschnitt (16) des Rotorgrundkörper gefügt wird, wobei jeder Adapter (14) mit dem Anbindungsabschnitt (15) der jeweiligen Laufschaufel (10) durch Reibschweißen verbunden wird, und **dadurch gekennzeichnet, dass** jede Laufschaufel (10) über den mit derselben verbundenen Adapater (14) mit dem jeweiligen Anbindungsabschnitt (16) des Rotorgrundkörpers durch induktives Hochfrequenzpressschweißen verbunden wird, wobei nach dem Verbinden der Laufschaufeln (10) mit dem Rotorgrundkörper zumindest Fügezonen einer Wärmebehandlung unterzogen werden.

2. Verfahren nach Anspruch 1,
**dadurch gekennzeichnet, dass**
jeder Adapater mit der jeweiligen Laufschaufel durch lineares Reibschweißen verbunden wird.

3. Verfahren nach Anspruch 1,
**dadurch gekennzeichnet, dass**
jeder Adapater mit der jeweiligen Laufschaufel durch Rotationsreibschweißen verbunden wird.

4. Verfahren nach einem der Ansprüche 1 bis 3,
**dadurch gekennzeichnet, dass**
nach dem Verbinden der Laufschaufeln mit dem Rotorgrundkörper zumindest Fügezonen mechanisch bearbeitet werden.

5. Verfahren nach einem der Ansprüche 1 bis 4,
**dadurch gekennzeichnet, dass**
Adapater aus einem schmelzschweißgeeigneten Werkstoff verwendet werden.

6. Verfahren nach einem der Ansprüche 1 bis 5,
**dadurch gekennzeichnet, dass**
gießtechnisch hergestellte Laufschaufeln aus einem nicht schmelzschweißgeeigneten Werkstoff an einen schmiedetechnisch hergestellten Rotorgrundkörper aus einem schmelzschweißgeeigneten Werkstoff gefügt werden.

7. Verfahren zum Reparieren von integral beschaufelten Gasturbinenrotoren, insbesondere von im Sinne des Verfahren nach einem der Ansprüche 1 bis 6 hergestellten Gasturbinenrotoren, wobei Laufschaufeln an einen Rotorgrundkörper unter Zwischenanordnung eines Adapters gefügt sind, **dadurch gekennzeichnet, dass** eine beschädigte Laufschaufel derart vom Rotorgrundkörper getrennt wird, dass der Adapater derselben durchtrennt wird, und dass anschließend vom Anbindungsabschnitt des Rotorgrundkörpers der verbleibende Abschnitt des Adapaters vollständig entfernt wird, und dass darauffolgend eine neue Laufschaufel oder eine reparierte Laufschaufel derart mit dem Anbindungsabschnitt des Rotorgrundkörpers verbundnen wird, dass ein mit der neuen Laufschaufel oder der reparierten Laufschaufel verbundener Adapater mit dem jeweiligen Anbindungsabschnitt des Rotorgrundkörpers durch induktives Hochfrequenzpressschweißen verbunden wird.

8. Verfahren nach Anspruch 7,
**dadurch gekennzeichnet, dass**
nach dem Verbinden der Laufschaufeln mit dem Rotorgrundkörper zumindest Fügezonen mechanisch bearbeitet werden.

9. Verfahren nach Anspruch 7 oder 8,
**dadurch gekennzeichnet, dass**
nach dem Verbinden der Laufschaufeln mit dem Rotorgrundkörper zumindest Fügezonen einer Wärmebehandlung werden.

10. Verfahren nach einem der Ansprüche 7 bis 9,
**dadurch gekennzeichnet, dass**
dann, wenn eine vorab vom Rotorgrundkörper abgetrennte und nach dem Abtrennen reparierte Laufschaufel mit dem Anbindungsbereich des Rotorgrundkörpers verbunden wird, zuerst der am Anbindungsabschnitt des Laufschaufel verbleibende Abschnitt des Adapaters plangeschliffen, anschließend durch Laserauftragschweißen neu aufgebaut und darauffolgend auf eine gewünschte Kontur gebracht wird.

11. Verfahren nach Anspruch 10,
**dadurch gekennzeichnet, dass**
der durch Laserauftragschweißen neu aufgebaute Adapater durch Fräsen auf die gewünschte Kontur gebracht wird.

## Claims

1. Method for producing integrally bladed gas turbine rotors, in particular integrally bladed turbine rotors, moving blades being joined to a main rotor body with the interposition of an adapter, one adapter (14) first being joined, at a corresponding attachment portion (15), to each moving blade (10), respectively, to be connected to the main rotor body, and then each moving blade (10) being joined, via the adapter (14) connected thereto, to a respectively corresponding attachment portion (16) of the main rotor body, each adapter (14) being connected to the attachment portion (15) of the corresponding moving blade (10) by means of friction welding, **characterized in that** each moving blade (10) is connected, via the adapter (14) connected thereto, to the corresponding attachment portion (16) of the main rotor body, by means of inductive high-frequency pressure welding, at least join zones being subjected to heat treatment after the moving blades (10) have been connected to the main rotor body.

2. Method according to claim 1, **characterized in that** each adapter is connected to the corresponding moving blade by means of linear friction welding.

3. Method according to claim 1, **characterized in that** each adapter is connected to the corresponding moving blade by means of rotary friction welding.

4. Method according to any of claims 1 to 3, **characterized in that** at least join zones are mechanically worked after the moving blades have been connected to the main rotor body.

5. Method according to any of claims 1 to 4, **characterized in that** adapters made of a material that is suitable for fusion welding are used.

6. Method according to any of claims 1 to 5, **characterized in that** moving blades produced by means of casting from a material that is not suitable for fusion welding are joined to a main rotor body produced by means of forging from a material that is suitable for fusion welding.

7. Method for repairing integrally bladed gas turbine rotors, in particular gas turbine rotors produced in accordance with the method according to any of claims 1 to 6, moving blades being joined to a main rotor body with the interposition of an adapter, **characterized in that** a damaged moving blade is separated from the main rotor body such that the adapter thereof is severed, and **in that** the remaining portion of the adapter is then completely removed from the attachment portion of the main rotor body, and **in that** a new moving blade or a repaired moving blade is subsequently connected to the attachment portion of the main rotor body such that an adapter connected to the new moving blade or the repaired moving blade is connected to the corresponding attachment portion of the main rotor body by means of inductive high-frequency pressure welding.

8. Method according to claim 7, **characterized in that** at least join zones are mechanically worked after the moving blades have been connected to the main rotor body.

9. Method according to either claim 7 or claim 8, **characterized in that** at least join zones are subjected to heat treatment after the moving blades have been connected to the main rotor body.

10. Method according to any of claims 7 to 9, **characterized in that**, when a moving blade that has previously been detached from the main rotor body and repaired after detachment is connected to the attachment portion of the main rotor body, the portion of the adapter remaining on the attachment portion of the moving blade is first surface-ground, and then reconstructed by means of laser deposition welding and subsequently formed into a desired shape.

11. Method according to claim 10, **characterized in that** the adapter that is reconstructed by means of laser deposition welding is formed into the desired shape by means of milling.

## Revendications

1. Procédé de production de rotors de turbines à gaz aubagés monoblocs, en particulier de rotors de turbines aubagés monoblocs, procédé dans lequel des aubes directrices sont assemblées à un corps de base de rotor **avec interposition d**'un adaptateur, dans lequel un adaptateur (14) est assemblé à chaque fois, **d'abord** à une section de raccordement (15) de chaque aube directrice (10) à raccorder au corps de base de rotor, puis chaque aube directrice (10) est assemblée **par l'intermédiaire de l'adaptateur (14)** raccordé à celle-ci à une section de raccordement (16) du corps de base de rotor, dans lequel chaque adaptateur (14) est raccordé par soudure par friction à la section de raccordement (15) de **l'aube directrice** (10) respective, et **caractérisé en ce que** chaque aube directrice (10) est raccordée, **par l'intermédiaire de l'adaptateur (14)** raccordé à celle-ci, à la section de raccordement (16) respective du corps de base de rotor par soudure inductive par pression à haute fréquence, **au moins des zones d'assemblage sont soumises à un traitement** thermique après la liaison des aubes directrices (10) au corps de base de rotor.

2. Procédé selon la revendication 1,
**caractérisé en ce que**
chaque adaptateur est raccordé **à l'aube directrice** respective par soudure linéaire par friction.

3. Procédé selon la revendication 1,
**caractérisé en ce que**
chaque adaptateur est raccordé **à l'aube directrice** respective par soudure rotative par friction.

4. Procédé selon l'une des revendications 1 à 3,
**caractérisé en ce que**
**au moins des zones d'assemblage sont traitées mécaniquement après** raccordement des aubes directrices au corps de base de rotor.

5. Procédé selon l'une des revendications 1 à 4,
**caractérisé en ce que**
**l'on utilise des adaptateurs** en matière appropriée au soudage par fusion.

6. Procédé selon l'une des revendications 1 à 5,
**caractérisé en ce que**
des aubes directrices en matière non appropriée au soudage par fusion, qui sont produites par une technique de moulage, sont assemblées à un corps de base de rotor en matière appropriée au soudage par fusion, qui est produit par une technique de forgeage.

7. Procédé de réparation de rotors de turbines à gaz aubagés monoblocs, en particulier de rotors de turbines à gaz produits conformément au procédé selon l'une des revendications 1 à 6, dans lequel les aubes directrices sont assemblées à un corps de base de rotor avec **interposition d'un adaptateur, caractérisé en ce qu'une** aube directrice endommagée est **séparée du corps de base de rotor de telle sorte que l'adaptateur** de celle-ci est sectionné, et **en ce qu'ensuite la section restante de l'adaptateur est complètement enlevée** de la section de raccordement du corps de base de rotor, et **en ce que** par la suite une nouvelle aube directrice ou une aube directrice réparée est raccordée à la section de raccordement du corps de base de **rotor de telle sorte qu'un adaptateur** raccordé avec la nouvelle aube directrice ou **l'aube directrice** réparée est raccordé à la section de raccordement respective du corps de base de rotor par soudure inductive par pression à haute fréquence.

8. Procédé selon la revendication 7,
**caractérisé en ce que**
**au moins des zones d'assemblage sont traitées mécaniquement après** le raccordement des aubes directrices au corps de base de rotor.

9. Procédé selon la revendication 7 ou 8,
**caractérisé en ce que**
**au moins des zones d'assemblage sont soumises à un traitement** thermique après le raccordement des aubes directrices au corps de base de rotor.

10. Procédé selon une des revendications 7 à 9,
**caractérisé en ce que**
**ensuite, lorsqu'une** aube directrice séparée dans un premier temps du corps de base de rotor et réparée après la séparation est raccordée à la zone de raccordement du corps de base de **rotor, la section de l'adaptateur** restant sur la section de raccordement de **l'aube** directrice **est d'abord poncée** de manière plane, ensuite remontée par soudage laser à apport de métal puis est appliquée sur un contour souhaité.

11. Procédé selon la revendication 10,
**caractérisé en ce que**
**l'adaptateur remonté par** soudage laser à apport de métal est appliqué par fraisage sur le contour souhaité.
